# EUROPÄISCHE PATENTANMELDUNG

(11) **EP 1 661 862 A1**
(43) Veröffentlichungstag der Anmeldung: **31.05.2006**
(21) Anmeldenummer: 05016946.5
(22) Anmeldetag: 04.08.2005
(51) Int. Cl.: C02F 1/32

(54) **Vorkammerreaktor zur UV-Bestrahlung von Flüssigkeiten**

(30) Priorität: 25.11.2004 DE 102004057076
(71) Anmelder: Wedeco AG, 40472 Düsseldorf (DE)
(72) Erfinder: Neitemeier, Dieter, 33803 Steinhagen (DE)
(74) Vertreter: Gerber, Wolfram

(57) **Zusammenfassung**

Die Erfindung betrifft eine Vorrichtung zur Desinfektion von Flüssigkeiten mittels ultravioletter Strahlung in einem Durchflussverfahren, mit einer durchströmbaren Reaktorkammer (2), in der eine Anzahl von UV-Strahlereinheiten (10) angeordnet ist, wobei die Reaktorkammer (2) mit einer an zwei Stirnseiten (14, 15) offenen Wandung versehen ist und abschnittsweise von wenigstens einer Vorkammer (3, 4) umgeben ist. Vorteilhafte Strömungsverhältnisse werden erzielt, indem die wenigstens eine Vorkammer (3, 4) in einem Abstand von der Stirnseite (14, 15) mit der Wandung verschweißt ist, so dass zwischen einem Mantel der Vorkammer (3, 4) und der Wandung ein ringförmiger Zwischenraum (6) mit einer lichten Weite (r) gebildet ist, und dass zwischen der Stirnseite (14, 15) und der Vorkammer (3, 4) ein im wesentlichen rotationssymmetrischer Ringspalt (d) ausgebildet ist.

## Beschreibung

Die vorliegende Erfindung betrifft einen Reaktor zur Desinfektion von Flüssigkeiten mittels ultravioletter Strahlung in einem Durchflussverfahren.

Die Desinfektion von Wasser mit ultravioletter Strahlung ist seit Jahrzehnten bekannt. Die ultraviolette Strahlung desinfiziert sowohl Abwasser als auch Trinkwasser durch eine Schädigung der DNS von pathogenen Mikroorganismen, die deren Vermehrungsfähigkeit beeinträchtigt und folglich Infektionen verhindert.

Während Abwasser üblicherweise im Ablauf von Kläranlagen in offenen Gerinnen oder drucklosen Leitungssystemen bestrahlt wird, ist im Trinkwasserbereich und bei der Desinfektion von Medien mit verminderter UV-Transparenz die Verwendung von geschlossenen Edelstahlkanälen mit darin angeordneten UV-Strahlern üblich. Der Bestrahlungsraum in diesen Kanälen wird auch Reaktor genannt.

Für eine wirkungsvolle Desinfektion von pathogenen Keimen in Trinkwasser ist es erforderlich, dass jeder im Wasser befindliche Mikroorganismus eine bestimmte Minimaldosis an ultravioletter Strahlung erhält. Die Dosis ist dabei gleich der Bestrahlungsintensität multipliziert mit der Bestrahlungsdauer. Die üblichen Reaktoren weisen einen Einlass und einen Auslass auf, die in Strömungsrichtung an den Enden des Reaktors angeordnet und in Radialrichtung ausgerichtet sind. Sie speisen das Medium unmittelbar in den Bestrahlungsraum ein. Das zu bestrahlende Medium wird dabei je nach Ausrichtung der Anschlüsse in einer etwa U-förmigen oder Z-förmigen Richtung durch den Reaktor geführt. Bei dieser Anordnung hat sich herausgestellt, dass sich bevorzugte Strömungspfade ausbilden. In diesen Strömungspfaden wird das Wasser mit den darin befindlichen Mikroorganismen besonders schnell durch den Reaktor befördert. Die Geschwindigkeit in diesem Bereich bedingt eine kurze Verweildauer, die eine relativ hohe Strahlungsintensität für ein gutes Desinfektionsergebnis erforderlich macht. Andere Strömungspfade, in denen die Strömungsgeschwindigkeit niedriger ist, erhalten aufgrund der etwa homogenen Strahlungsverteilung innerhalb des Reaktors eine wesentlich höhere Strahlungsdosis als es eigentlich erforderlich wäre. Die Strahlung wird folglich nicht optimal ausgenutzt.

Aus dem US-Patent 4,206,066 ist ein Reaktor bekannt, bei dem ein einzelner UV-Strahler von einem koaxialen Glasrohr und weiter außen von einer koaxialen Einströmkammer umgeben ist. Das zu bestrahlende Wasser tritt zunächst in die Einströmkammer ein und läuft außen um das Glasrohr zu einem offenen Ende hin. Auf diesem Weg erhalten die Mikroorganismen in dem strömenden Wasser eine erste Strahlungsdosis, welche durch das koaxiale Innenrohr hindurchtritt. Sodann tritt die Strömung an einem offenen Ende in das Innenrohr ein und läuft zwischen dem Innenrohr und dem Strahler hindurch, um am anderen Ende des Innenrohres auszutreten. Die im Wasser enthaltenen Mikroorganismen erhalten auf dem zweiten Teilweg zwischen dem Strahler und dem koaxialen Innenrohr eine zweite, erheblich höhere Strahlungsdosis. Die gesamte Dosis, die für die Desinfektion relevant ist, ist die Summe der beiden Dosen, nämlich der zuerst im Außenraum erhaltenen Dosis und danach im Innenraum erhaltenen Dosis. Aufgrund der koaxialen Anordnung des Innenrohres und des Strahlers und des relativ engen Ringspaltes zwischen diesen beiden Bauelementen ist zu erwarten, dass sich keine Zonen mit besonders niedriger Strömungsgeschwindigkeit ausbilden. Der Reaktor nach der US 4,206,066 ist aber konstruktiv aufwändig und nur für einen einzelnen UV-Strahler geeignet.

Es ist deshalb Aufgabe der vorliegenden Erfindung, einen konstruktiv weniger aufwendigen Reaktor für mehrere UV-Strahler zu schaffen, der eine gleichmäßigere Strömung im inneren der Reaktorkammer gewährleistet.

Diese Aufgabe wird von einem Reaktor zur Desinfektion von Flüssigkeiten mittels ultravioletter Strahlung in einem Durchflussverfahren mit den Merkmalen des Anspruchs 1 gelöst.

Weil die wenigstens eine Vorkammer in einem Abstand von der Stirnseite mit der Wandung verschweißt ist, so dass zwischen einem Mantel der Vorkammer und der Wandung ein ringförmiger Zwischenraum mit einer lichten Weite gebildet ist, und weil zwischen der Stirnseite und der Vorkammer ein im wesentlichen rotationssymmetrischer Ringspalt ausgebildet ist, stellt sich ein Geschwindigkeitsprofil der Strömung in der Reaktorkammer ein, welches homogen und ohne ausgeprägt schnelle Strömungspfade ausgebildet ist.

Wenn die Reaktorkammer aus einem nicht UV-transparenten Material gefertigt ist, vorzugsweise aus Edelstahl, ist der Aufbau besonders einfach und dauerhaft. Es kann auch vorgesehen sein, den Reaktor aus Polyethylen zu fertigen.

Für besonders gute Strömungsverhältnisse kann vorgesehen sein, dass eine erste Vorkammer stromaufwärts der Reaktorkammer und eine zweite Vorkammer stromabwärts der Reaktorkammer angeordnet sind. Dabei ist bevorzugt, wenn die erste und die zweite Vorkammer im wesentlichen gleiche Abmessungen aufweisen.

Dabei ist es ausreichend, wenn jede der Vorkammern die Reaktorkammer zu etwa 20% der Längserstreckung der Reaktorkammer überdeckt.

Die Strömungsverhältnisse werden weiter verbessert, wenn die lichte Weite des Zwischenraums in Radialrichtung zwischen der Vorkammer und der Reaktorkammer etwa 1,5 mal so groß ist wie der Abstand der Stirnseite der Reaktorkammer von der Stirnseite der Vorkammer.

Nachfolgend wird die vorliegende Erfindung anhand von Ausführungsbeispielen beschrieben. Es zeigen:
- Figur 1:: einen erfindungsgemäßen Reaktor in einer perspektivischen Darstellung;
- Figur 2:: den Reaktor gemäß Figur 1 in einer Seitenansicht;
- Figur 3:: den Reaktor gemäß Figur 1 und Figur 2 in einer Draufsicht;
- Figur 4:: den Reaktor in einer Stirnansicht; sowie
- Figur 5:: einen Reaktor mit anders gestalteten Vorkammer in einer Darstellung entsprechend Figur 1.

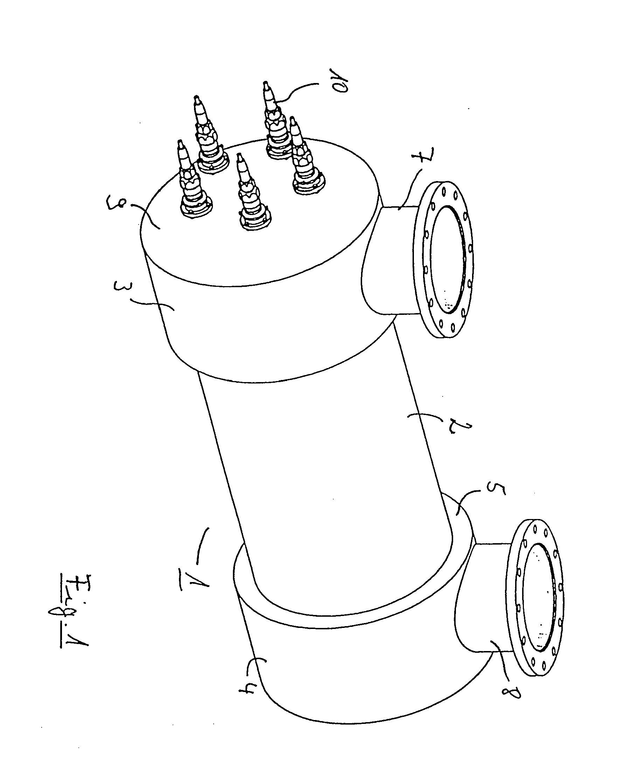

In der Figur 1 ist ein Reaktor 1 hier als Ausführungsbeispiel zur Bestrahlung von Trinkwasser mit ultravioletten Strahlen in einer perspektivischen Darstellung veranschaulicht. Der Reaktor 1 weist eine zylindrische, rohrförmige Reaktorkammer 2 auf, die an ihren beiden Enden jeweils eine erste Vorkammer 3 und eine zweite Vorkammer 4 trägt. Die Vorkammern 3 und 4 sind nach Art eines Klöpperbodens ausgebildet und koaxial zu der Reaktorkammer 2 angeordnet. Jeweils ein ringförmiges Verbindungselement 5 verbindet die Vorkammern 3 und 4 mit der Reaktorkammer 2 in wasser- und gasdichter Weise. Zwischen den Vorkammern 3, 4 und der Wandung der Reaktorkammer 2 ist ein ringförmiger Zwischenraum mit der lichten Weite r gebildet. Die Vorkammern 3 und 4 tragen an ihrer Oberseite jeweils einen runden Flansch 7, 8 zur Verbindung mit einer Wasserleitungsinstallation. Die Vorkammer 3 trägt an ihrer der Reaktorkammer 2 abgewandten Stirnseite einen bombierten Klöpperboden 9. Dieser Klöpperboden 9 ist durchsetzt von insgesamt fünf Öffnungen, in die fünf UV-Strahleranordnungen 10 in wasserdichter Weise eingesetzt sind. Die Strahleranordnungen 10 erstrecken sich parallel zur Symmetrieachse der Reaktorkammer 2 in diese hinein.

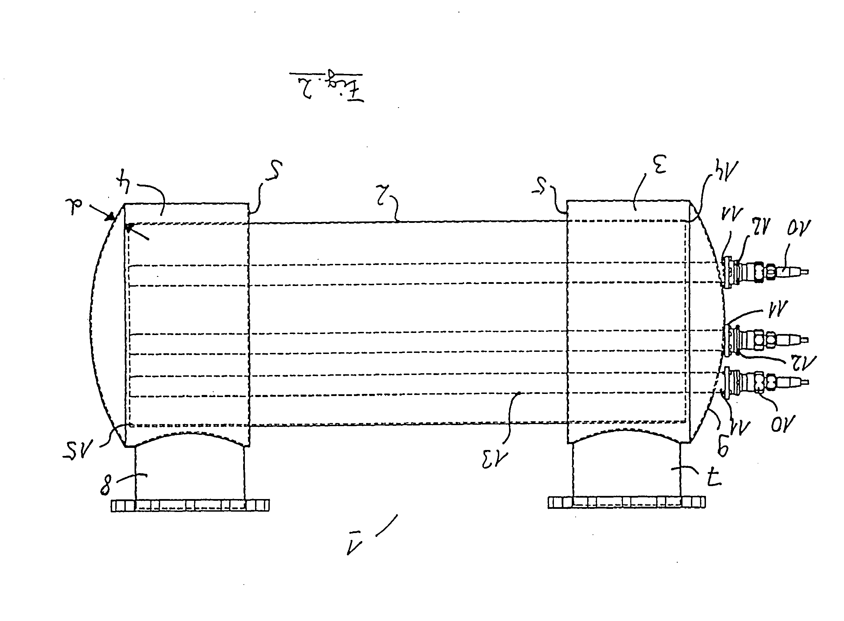

Dies ist in der Figur 2 näher veranschaulicht.

Der Klöpperboden 9 trägt insgesamt fünf Flansche 11, die zum Innenraum der Vorkammer 3 hinführen. Auf die Flansche 11 sind Anschlusselemente 12 für die Strahleranordnungen 10 aufgesetzt, so dass die Strahleranordnungen 10 wasserdicht befestigt werden. Die Strahleranordnungen 10 weisen jeweils ein Hüllrohr 13 aus Quarz oder einem anderen UV-durchlässigen Material auf. Das Hüllrohr 13 erstreckt sich achsparallel durch die gesamte Reaktorkammer 2. Die Reaktorkammer 2 ragt in jede der Vorkammern 3 und 4 soweit hinein, dass die Erstreckung der Flansche 7 und 8 in Axialrichtung der Reaktorkammer 2 überdeckt werden. Dabei ist zwischen den Flanschen 7 und 8 und der Reaktorkammer 2 ein Abstand r vorgesehen, der etwa der Breite der Verbindungselemente 5 in dieser Richtung entspricht, also etwa der Differenz der Radien R der Reaktorkammer 2 einerseits und der Vorkammern 3 und 4 andererseits. Weiter ist zwischen jedem stirnseitigen Ende 14, 15 der Reaktorkammer 2 und dem jeweils benachbarten Klöpperboden der Vorkammern 3 bzw. 4 ein Abstand d vorgesehen, der einen ringspaltförmigen Durchgang von dem Flansch 7, 8 durch die Vorkammer 3, 4 in die Reaktorkammer 2 erlaubt.

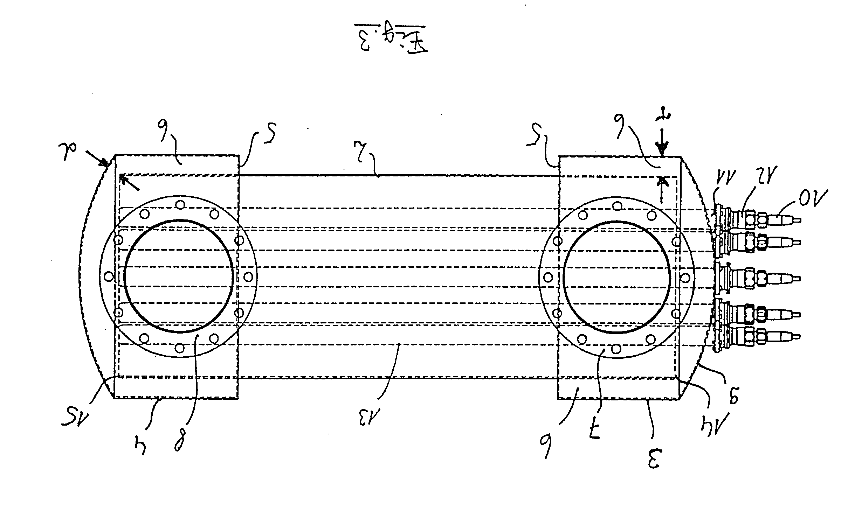

Die Figur 3 zeigt den insoweit beschriebenen Reaktor in einer Draufsicht. Gleiche Bauelemente tragen gleiche Bezugsziffern. In dieser Darstellung ist der Abstand d zwischen der Stirnseite 15 der Reaktorkammer und dem Klöpperboden der Vorkammer 4 nochmals veranschaulicht. Außerdem ist der ringförmige Spalt zwischen der äußeren Mantelfläche der Vorkammer 3 und der Reaktorkammer 2 mit r bezeichnet.

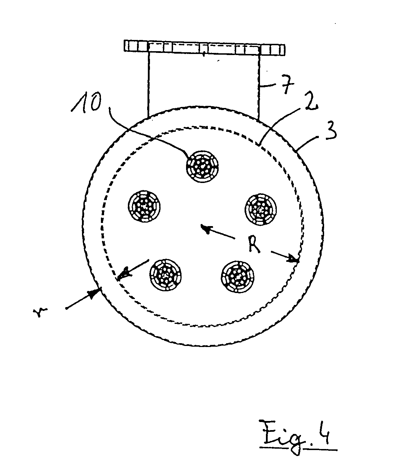

Die Figur 4 zeigt schließlich den insoweit beschriebenen Reaktor in einer Stirnansicht. Es ist ersichtlich, dass die Strahlereinheiten 10, von denen in diesem Falle fünf Einheiten vorgesehen sind, symmetrisch um die Mittenachse der Reaktorkammer 2 verteilt sind.

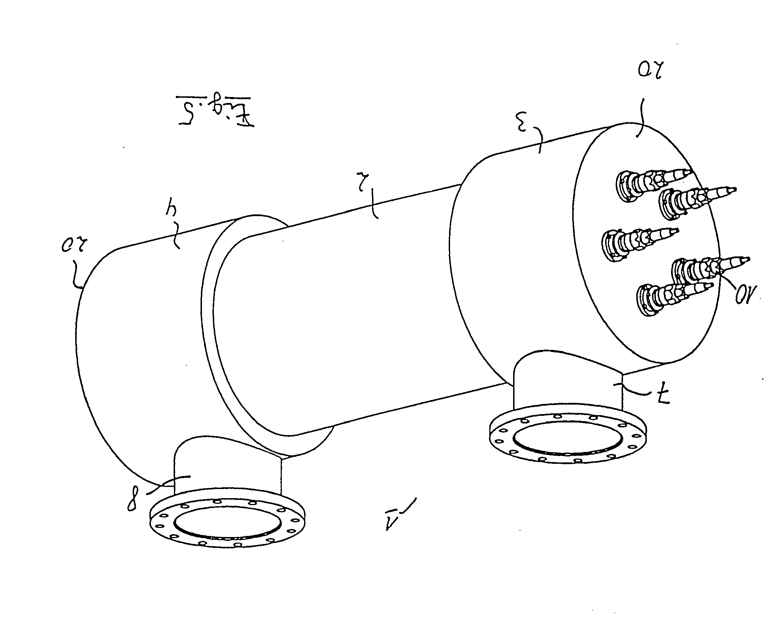

Die Figur 5 zeigt eine andere Ausführungsform eines erfindungsgemäßen Vorkammerreaktors in einer Darstellung entsprechend Figur 1. Bei dieser Ausführungsform sind die stirnseitigen Böden der Vorkammern 3 und 4 nicht bombiert sondern eben. Für die übrigen Konstruktionsmerkmale gilt das im Zusammenhang mit Figur 1 gesagte.

In der Praxis wird der UV-Reaktor zur Desinfektion von Trinkwasser eingesetzt. Dazu wird der Zulauf des mikrobiologisch unbehandelten Trinkwassers mit dem Flansch 7 verbunden, während der Ablauf nach der Desinfektion an dem Flansch 8 angeschlossen wird. Das Wasser strömt dann von dem Flansch 7 aus in die Vorkammer 3, und zwar dort in den ringförmigen Raum mit der Breite r zwischen der Mantelfläche der Vorkammer 3 und der Außenwand der Reaktorkammer 2. Der Eintritt von der Vorkammer 3 in die Reaktorkammer 2 erfolgt durch den Ringspalt zwischen dem stirnseitigen Ende 14 der Reaktorkammer 2 und dem Klöpperboden 9. Da der Abstand d hier kleiner ist als die Breite r zwischen der Vorkammer 3 und der Reaktorkammer 2 ist, verteilt sich die Strömung durch den Ringspalt nahezu gleichmäßig entlang des gesamten Umfangs. Die Einströmung in die Reaktorkammer 2 ist deshalb etwa gleichförmig um die Mittenachse der Reaktorkammer 2 verteilt. Es ergibt sich eine nahezu homogene Strömungsverteilung innerhalb der Reaktorkammer 2 parallel zu den Hüllrohren 13 der Strahlereinheiten 10. Ausgeprägte Geschwindigkeitsmaxima treten nicht auf. Die UV-Strahlung, die von den Strahlereinheiten 10 abgegeben wird, wirkt deshalb im wesentlichen auf alle in der strömenden Flüssigkeit enthaltenen Mikroorganismen mit gleicher Strahlungsdosis. Bei dieser Anordnung muss nicht eine besonders hohe Intensität vorgehalten werden, um auch die Mikroorganismen in isolierten Strömungspfaden mit weit überdurchschnittlicher Strömungsgeschwindigkeit ausreichend bestrahlen zu können. Die Energieeffizienz dieses UV-Reaktors ist deshalb erheblich besser als diejenige herkömmliche UV-Reaktoren.

Nach der Bestrahlung des Trinkwassers innerhalb der Reaktorkammer 2 tritt diese wiederum durch einen ringförmigen Spalt zwischen der Stirnseite 15 und der Vorkammer 4 in den ringförmigen Raum zwischen Reaktorkammer 2 und Vorkammer 4 ein und verlässt dann den UV-Reaktor 1 durch den Flansch 8.

Durch die verwendeten Materialien (Edelstahl) und freie Anordnung der Strahlereinheiten 10 innerhalb der Reaktorkammer 2 ist der geschriebene UV-Reaktor praktisch beliebig skalierbar.

Bei dem beschriebenen Ausführungsbeispiel sind für die Erzielung einer gleichmäßigen Durchströmung folgende Abmessungen vorteilhaft:

Der innere Radius R der Reaktorkammer 2 beträgt 280 mm.

Der Ringspalt r (Zwischenraum 6) zwischen der Vorkammer 3 und der Außenseite der Reaktorkammer 2 beträgt etwa 30 mm.

Der Spalt d zwischen der Stirnseite 14 und dem Klöpperboden 9 bzw. zwischen der Stirnseite 15 und dem Klöpperboden 9 der Vorkammer 4 beträgt 20 mm.

Der Durchmesser der Hüllrohre 13 der Strahlereinheiten 10 beträgt jeweils etwa 50 mm.

## Patentansprüche

1. Vorrichtung zur Desinfektion von Flüssigkeiten mittels ultravioletter Strahlung in einem Durchflussverfahren, mit einer durchströmbaren Reaktorkammer (2), in der eine Anzahl von UV-Strahlereinheiten (10) angeordnet ist, wobei die Reaktorkammer (2) mit einer UV-undurchlässigen und an zwei Stirnseiten (14, 15) offenen Wandung versehen ist und abschnittsweise von wenigstens einer Vorkammer (3, 4) umgeben ist, **dadurch gekennzeichnet, dass** die wenigstens eine Vorkammer (3, 4) in einem Abstand von der Stirnseite (14, 15) mit der Wandung verbunden ist, so dass zwischen einem Mantel der Vorkammer (3, 4) und der Wandung ein umlaufender Zwischenraum (6) mit einer lichten Weite (r) gebildet ist, und dass zwischen der Stirnseite (14, 15) und der Vorkammer (3, 4) ein Spalt (d) ausgebildet ist.

2. Vorrichtung nach Anspruch 1, **dadurch gekennzeichnet, dass** der Zwischenraum (6) ringförmig ausgebildet ist und dass der Spalt ein im wesentlichen rotationssymmetrischer Ringspalt ist.

3. Vorrichtung nach einem der vorhergehenden Ansprüche, **dadurch gekennzeichnet, dass** die Reaktorkammer (2) aus einem korrosionsbeständigen Material gefertigt ist, vorzugsweise aus Edelstahl.

4. Vorrichtung nach einem der vorhergehenden Ansprüche 1 - 2, **dadurch gekennzeichnet, dass** die Reaktorkammer (2) aus einem korrosionsbeständigen Material gefertigt ist, vorzugsweise aus Polyethylen.

5. Vorrichtung nach einem der vorhergehenden Ansprüche, **dadurch gekennzeichnet, dass** eine erste Vorkammer (3) stromaufwärts der Reaktorkammer (2) und eine zweite Vorkammer (4) stromabwärts der Reaktorkammer (2) vorgesehen ist.

6. Vorrichtung nach Anspruch 3, **dadurch gekennzeichnet, dass** die erste (3) und die zweite Vorkammer (4) im wesentlichen gleiche Abmessungen aufweisen.

7. Vorrichtung nach einem der vorhergehenden Ansprüche, **dadurch gekennzeichnet, dass** jede der Vorkammern (3, 4) die Reaktorkammer (2) zu etwa 20% der Längserstreckung der Reaktorkammer (2) überdeckt.

8. Vorrichtung nach einem der vorhergehenden Ansprüche, **dadurch gekennzeichnet, dass** die lichte Weite (r) des Zwischenraums (6) zwischen der Vorkammer (3, 4) und der Reaktorkammer (2) etwa 1,5 mal so groß ist wie der Abstand (d) der Stirnseite (14, 15) der Reaktorkammer (2) von der Stirnseite (9) der Vorkammer.
